# EUROPEAN PATENT APPLICATION

(11) **EP 4 510 299 A1**
(43) Date of publication of application: **19.02.2025**
(21) Application number: 22961967.1
(22) Date of filing: 28.12.2022
(51) Int. Cl.: H01M 10/48

(54) **BATTERY AND ELECTRIC DEVICE**

(30) Priority: 11.10.2022 CN 202222667671 U
(71) Applicant: Contemporary Amperex Technology Co., Limited, Fujian 352100 (CN)
(72) Inventor: HU, Lu, Ningde City, Fujian 352100 (CN); CHEN, Xiaobo, Ningde City, Fujian 352100 (CN); WU, Shaoji, Ningde City, Fujian 352100 (CN); GAO, Xiongwei, Ningde City, Fujian 352100 (CN); WANG, Xuehui, Ningde City, Fujian 352100 (CN)
(74) Representative: Laufhütte, Dieter
(86) International application number: PCT/CN2022/142919
(87) International publication number: WO 2024/077789

(57) **Abstract**

The embodiments of the present disclosure provide a battery and an electric device. The battery comprises multiple battery cells, a box, and a spray mechanism, wherein at least one battery cell among multiple battery cells comprises a pressure relief mechanism. The box comprises an electrical chamber, a collection chamber, and a first isolation component, wherein the electrical chamber is configured to accommodate the multiple battery cells; the collection chamber is configured to collect emissions from the battery cells arranged with the pressure relief mechanism when the pressure relief mechanism is actuated; the first isolation component is configured to isolate the electrical chamber and the collection chamber; and the first isolation component is provided with a first through hole, wherein the emissions can enter the collection chamber through the first through hole. The spray mechanism is arranged within the collection chamber, wherein the spray mechanism is configured to spray firefighting media into the collection chamber. The battery of the present disclosure has relatively high safety.

## Description

### Cross-reference to Related Applications

The present disclosure claims the priority to the Chinese patent application with the filling No. CN202222667671.6 filed on October 11, 2022, and entitled "Battery and Electric Device", the contents of which are incorporated herein by reference in entirety.

### Technical Field

The present disclosure relates to the technical field of batteries, in particular to a battery and an electric device.

### Background Art

Energy conservation and emission reduction are the keys to the sustainable development of the automotive industry, and electric vehicles, due to their energy-saving and environmentally friendly advantages, have become an important component of sustainable development in the automotive industry. For electric vehicles, battery technology is a crucial factor that affects their development.

The battery in a thermal runaway state will release large amounts of smoke containing flammable substances. The ignition energy required for the smoke is very small. With the assistance of oxygen in the air, the smoke is very easy to ignite. In severe cases, explosions may even occur. When combustion occurs, the technical solution in the prior art will use a spray method for firefighting. However, this method will directly affect the high-voltage components of the battery, posing a risk of secondary electrical hazards.

### Summary

The objective of the present disclosure is to provide a battery and an electric device, wherein the battery has relatively high safety.

In the first aspect, the present disclosure provides a battery. The battery comprises multiple battery cells, a box, and a spray mechanism, wherein at least one battery cell among multiple battery cells comprises a pressure relief mechanism. The box comprises an electrical chamber, a collection chamber, and a first isolation component, wherein the electrical chamber is configured to accommodate the multiple battery cells; the collection chamber is configured to collect emissions from the battery cells arranged with the pressure relief mechanism when the pressure relief mechanism is actuated; the first isolation component is configured to isolate the electrical chamber and the collection chamber; and the first isolation component is provided with a first through hole, wherein the emissions can enter the collection chamber through the first through hole. The spray mechanism is arranged within the collection chamber, wherein the spray mechanism is configured to spray firefighting media into the collection chamber.

According to the embodiments of the present disclosure, by partitioning the electrical chamber accommodating the battery cell from the collection chamber, emissions from the battery cells are sprayed for firefighting after being discharged into the collection chamber. This reduces the risk of firefighting media entering the electrical chamber and affecting the battery cell, thereby reducing the risk of electrical hazards and improving the safety of the battery.

According to some embodiments of the present disclosure, the battery further comprises a first exhaust valve, wherein the first exhaust valve is mounted at the first through hole.

In the above solution, the control for communication and disconnection between the electrical chamber and the collection chamber is achieved by arranging the first exhaust valve.

According to some embodiments of the present disclosure, the pressure relief mechanism is arranged opposite to the first through hole.

In the above solution, the pressure relief mechanism is arranged opposite to the first through hole so as to allow emissions from the battery cell to be discharged more directly into the collection chamber.

According to some embodiments of the present disclosure, the box is provided thereon with an exhaust port, wherein the emissions are discharged from the box through the exhaust port.

In the above solution, by arranging the exhaust port on the box, emissions can be discharged from inside the box of the battery to the outside, thus reducing the risk of secondary hazards of the battery.

According to some embodiments of the present disclosure, the battery further comprises a second exhaust valve, wherein the second exhaust valve is mounted at the exhaust port.

In the above solution, the control of emissions from inside the box to the external environment is achieved by arranging the second exhaust valve.

According to some embodiments of the present disclosure, the box further comprises a second isolation component, wherein the second isolation component is configured to divide the collection chamber into a first sub-chamber and a second sub-chamber; the second isolation component is provided with a second through hole that communicates the first sub-chamber and the second sub-chamber; the first through hole is configured to communicate the electrical chamber and the first sub-chamber; the emissions are discharged from the box sequentially through the first through hole, the first sub-chamber, the second through hole, the second sub-chamber, and the exhaust port; and the spray mechanism is arranged within the first sub-chamber and/or the second sub-chamber.

In the above solution, further partitioning of the collection chamber is achieved by arranging the second isolation component, which serves to buffer the discharge process of emissions. This prevents the direct impact of emissions on through holes such as the exhaust port, which will cause structural damage.

According to some embodiments of the present disclosure, the electrical chamber and the first sub-chamber are arranged along a first direction; the second sub-chamber and the first sub-chamber are arranged along the first direction; the electrical chamber and the second sub-chamber are arranged along a second direction; and the second direction is perpendicular to the first direction.

In the above solution, the arrangement of the electrical chamber, the first sub-chamber, and the second sub-chamber in sequence ensures that the discharge path of emissions essentially passes through the entire collection chamber, which makes full use of the entire internal space of the collection chamber, thus indirectly increasing the energy density of the battery.

According to some embodiments of the present disclosure, the first isolation component comprises a first plate body and a second plate body perpendicular to each other; the electrical chamber and the first sub-chamber are located on opposite sides of the first plate body; the first through hole is provided on the first plate body; the electrical chamber and the second sub-chamber are located on opposite sides of the second plate body; and the second isolation component is a plate-like structure and is coplanar with the first plate body.

In the above solution, the arrangement of the electrical chamber, the first sub-chamber, and the second sub-chamber makes full use of the internal space of the box and simplifies the structure of the first isolation component and the second isolation component.

According to some embodiments of the present disclosure, the first plate body and the second isolation component are integrally molded.

In the above solution, integrally molding the first plate body with the second isolation component simplifies the manufacturing process and reduces manufacturing costs.

According to some embodiments of the present disclosure, a sensor is further provided within the collection chamber; the sensor is configured to detect a gas state parameter within the collection chamber; the spray mechanism is connected to the sensor; and the spray mechanism is configured to spray firefighting media into the collection chamber when the sensor detects an abnormal gas state parameter.

In the above solution, by arranging the sensor within the collection chamber to detect the gas state parameter inside the collection chamber, it provides the basis for the operation of the spray mechanism.

According to some embodiments of the present disclosure, the battery further comprises a control device and a valve; the control device is connected to the sensor and the valve; the control device controls the valve based on a signal from the sensor; and the valve controls opening or closing (turning on or turning off) of the spray mechanism.

In the above solution, precise control of the spray mechanism is achieved by arranging the control device and the valve according to the detection results of the sensor.

In the second aspect, the present disclosure further provides an electric device comprising the battery as described in the above embodiments, wherein the battery is configured to provide electrical energy.

The additional aspects and advantages of the present disclosure will be partially disclosed in the following description, while some may become evident from the description or be understood through practical implementation of the present disclosure.

### Brief Description of Drawings

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 is a schematic diagram of a vehicle provided in one embodiment of the present disclosure;
FIG. 2 is a structural schematic diagram of a battery provided in one embodiment of the present disclosure;
FIG. 3 is a schematic diagram of a disassembled structure of a battery provided in one embodiment of the present disclosure;
FIG. 4 is a schematic diagram of an internal structure of the battery shown in FIG. 3;
FIG. 5 is a top view of an internal structure of the battery shown in FIG. 3;
FIG. 6 is a schematic diagram of a disassembled structure of a battery provided in another embodiment of the present disclosure;
FIG. 7 is a top view of the battery shown in FIG. 6;
FIG. 8 is a schematic diagram of the battery shown in FIG. 7 in a section along A-A;
FIG. 9 is a schematic diagram of a disassembled structure of a battery provided in another embodiment of the present disclosure;
FIG. 10 is a top view of the battery shown in FIG. 9; and
FIG. 11 is a schematic diagram of the battery shown in FIG. 10 in a section along B-B.

In the drawings, the drawings are not drawn to actual scale.

Reference numerals 1000 - vehicle; 100- battery; 10- battery cell; 11-pressure relief mechanism; 20- box; 21- first sub-box; 22- second sub-box; 23-electrical chamber; 24- collection chamber; 241- first sub-chamber; 242-second sub-chamber; 25- first isolation component; 251-first through hole; 252-first plate body; 253- second plate body; 26- exhaust port; 27- second isolation component; 271- second through hole; 30- spray mechanism; 200- controller; 300- motor.

### Detailed Description of Embodiments

In order to make the objective, technical solutions, and advantages of the embodiments of the present disclosure clearer, the following description will provide a clear and comprehensive explanation of the technical solutions in the embodiments of the present disclosure with reference to the drawings. Clearly, the described embodiments are part of the embodiments of the present disclosure and not the entire embodiments. Based on the embodiments in the present disclosure, all other embodiments obtained by those of ordinary skill in the art without making inventive efforts are within the scope of protection of the present disclosure.

Unless otherwise defined, all technical and scientific terms used herein have the same meaning as understood by those skilled in the art of the relevant technical field. The terms used in the summary of the present disclosure are used for the purpose of describing specific embodiments and are not intended to limit the present disclosure. The terms "comprising" and "providing" and their variations, as well as any other variations, are intended to cover non-exclusive inclusion in the summary and the claims of the present disclosure, as well as in the drawings. The terms "first", "second", etc., used in the summary and claims of the present disclosure, or in the above figures, are used to distinguish between different objects and are not intended to describe a specific sequence or hierarchy.

The term "embodiment" used in the present disclosure means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other. Those skilled in the art understand explicitly and implicitly that the embodiments described in the present disclosure can be combined with other embodiments.

In the description of the present disclosure, it should be noted that, unless otherwise clearly stipulated and limited, the terms "mount", "communicate", "connect" and "attach" should be understood in a broad sense, for example, it can be a fixed connection, a detachable connection, or an integral connection; and it can be a direct connection, an indirect connection through an intermediary, or an internal communication between two components. Those of ordinary skill in the art can understand the meanings of the above terms in the present disclosure according to specific situations.

In the present disclosure, the term "and/or" is used as a way to describe the relationship between associated objects, indicating that there can be three possible relationships. For example, "A and/or B" can represent: the presence of A alone, the presence of both A and B, or the presence of B alone. Additionally, the character "/" in the present disclosure generally represents an "or" relationship between the preceding and following associated objects.

In the present disclosure, the term "multiple" refers to two or more (including two). Similarly, "multiple groups" refers to two or more groups (including two groups), and "multiple pieces" refers to two or more pieces (including two pieces).

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on.

A battery cell comprises an electrode assembly and an electrolyte. The electrode assembly is composed of a positive electrode sheet, a negative electrode sheet, and a separator. The battery cells work primarily on the movement of metal ions between the positive electrode sheet and the negative electrode sheet. The positive electrode sheet comprises a positive electrode current collector and a positive electrode active material layer. The positive electrode active material layer is coated on a surface of the positive electrode current collector. The electrode current collector not coated with the positive electrode active material layer serves as the positive electrode tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide, and so on. The negative electrode sheet comprises a negative electrode current collector and a negative electrode active material layer. The negative electrode active material layer is coated on a surface of the negative electrode current collector. The electrode current collector not coated with the negative electrode active material layer serves as the negative electrode tab. The material of the negative electrode current collector can be copper, and the negative active material can be carbon or silicon, and so on. To ensure that there is no fuse blow during high current flow, the number of positive electrode tabs is plurality and stacked together, and the number of negative electrode tabs is plurality and stacked together. The material of the separator can be PP (polypropylene), PE (polyethylene), and so on.

The development of battery technology needs to consider multiple design factors simultaneously, such as energy density, discharge capacity, charge-discharge rates, and other performance parameters. Additionally, the assembly efficiency and the safety performance of the battery also need to be taken into consideration.

For battery cells, the main safety hazards arise during the charging and discharging processes, along with appropriate environmental temperature design. To effectively avoid unnecessary losses, corresponding protective measures are generally implemented for the battery cell. Specifically, protective measures include at least switching elements, selecting appropriate materials for the separators, and pressure relief mechanisms. Switching elements refer to components within the battery cell that can stop charging or discharging when the temperature or resistance reaches a certain threshold. The separator is configured to separate the positive electrode sheet and the negative electrode sheet, which can automatically dissolve microscale (even nanoscale) micropores attached thereon when the temperature rises to a certain value, thus preventing metal ions from passing through the separator and terminating the internal reactions of the battery cell.

The pressure relief mechanism can refer to a component or device within the battery cell that is actuated when the internal pressure or temperature of the battery cell reaches a preset threshold, releasing internal pressure or temperature. The threshold design varies depending on the design requirements. The threshold can depend on the material of one or more components in the battery cell, such as the positive electrode sheet, the negative electrode sheet, the electrolyte, and the separator. The pressure relief mechanism can take the form of devices such as explosion-proof valves, gas valves, pressure relief valves, or safety valves, and it can specifically use pressure-sensitive or temperature-sensitive elements or structures. In other words, when the internal pressure or temperature of the battery cell reaches a predetermined threshold, the pressure relief mechanism activates, or a weakened structure within the pressure relief mechanism is damaged, thus creating an opening or channel for the release of internal pressure or temperature.

In the present disclosure, the term "actuate" refers to the pressure relief mechanism undergoing an action or being activated to a certain state, thereby allowing the release of internal pressure and temperature within the battery cell. The actions produced by the pressure relief mechanism can comprise but are not limited to at least a portion of the pressure relief mechanism breaking, shattering, tearing, opening, and so on. When the pressure relief mechanism is actuated, the high-temperature and high-pressure substances as emissions inside the battery cell are discharged outward from the actuation point. This method allows the battery cell to undergo pressure relief and temperature relief under controlled pressure or temperature conditions, thereby avoiding more potential and serious accidents.

The emissions from the battery cell mentioned in the present disclosure include, but are not limited to: electrolyte, dissolved or fragmented positive and negative electrode sheets, fragments of the separator, high-temperature and high-pressure gases generated by reactions, flames, and so on.

The protective measures for batteries also include firefighting measures. Firefighting measures are aimed at taking direct firefighting measures after the battery cell has undergone thermal runaway to reduce the temperature and concentration of gaseous combustibles in the emissions produced by thermal runaway, thereby reducing the likelihood of combustion of gaseous combustibles. Alternatively, the firefighting media is directly sprayed to reduce the intensity and scope of the fire so as to reduce the impact range of the fire, thus preventing the combustion from further becoming an explosion.

In the prior art, firefighting measures often include directly spraying firefighting media onto the battery cell. The firefighting media undergoes chemical reactions with combustible materials or liquefy at high temperatures in the emissions. The firefighting media itself or the substances formed from it can carry conductivity. These substances, attached or dispersed near the electrode assembly of the battery cell, can alter the conductive environment around the electrode assembly, thus leading to electrical hazards. In severe cases, the consequences of these secondary electrical hazards can even exceed those caused by the thermal runaway of the battery cell itself.

Given this, the present disclosure provides a technical solution that separates the interior of the box of the battery into an electrical chamber for accommodating the battery cell and a collection chamber for collecting emissions. When the pressure relief mechanism is actuated, emissions from the battery cell enter the collection chamber and do not enter or remain in small amounts in the electrical chamber. A spray mechanism is arranged within the collection chamber. The spray mechanism sprays the emissions with the firefighting media only within the collection chamber, thus effectively avoiding direct impacts of the firefighting media and its reaction products on the battery cell itself.

The battery cell disclosed in the embodiments of the present disclosure can be used in various electrical devices, including but not limited to vehicles, ships, or aircraft. The power system of the electrical device can be comprised of the battery cell and battery disclosed in the embodiments of the present disclosure.

The embodiments of the present disclosure provide an electrical device that uses batteries as a power source. The electrical devices can include but are not limited to mobile phones, tablets, laptops, electric toys, power tools, electric bicycles, electric motorcycles, electric cars, ships, spacecraft, and so on. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present disclosure where the electrical device is a vehicle 1000 as an example.

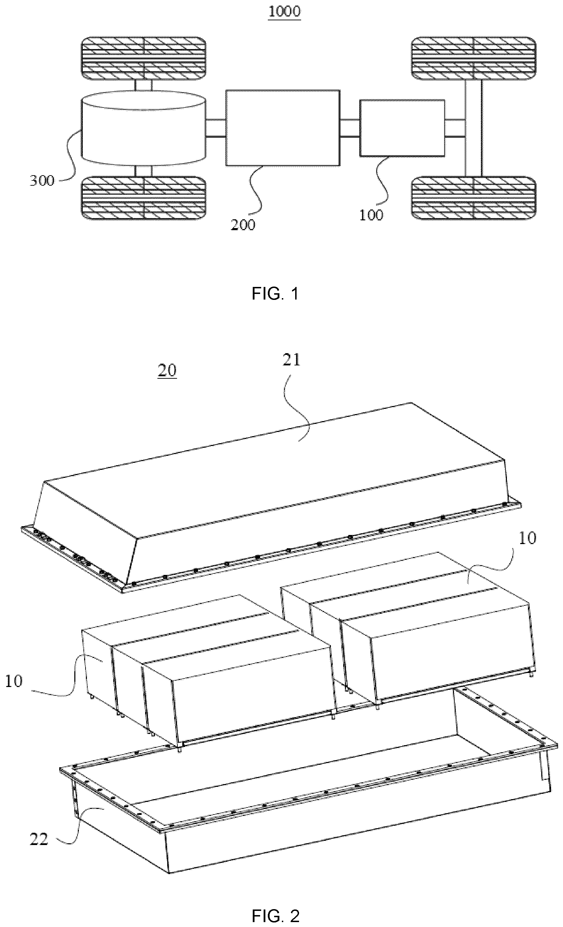

Referring to FIG. 1, FIG. 1 is a schematic diagram of a structure of a vehicle provided in some embodiments of the present disclosure. The vehicle 1000 can be a gasoline-powered car, a natural gas car, or a new energy vehicle. The new energy vehicles can be pure electric cars, hybrid cars, extended-range cars, etc. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000, providing power to the electrical systems of the vehicle 1000 for tasks such as starting, navigation, and operational power requirements of the vehicle 1000 during its operation.

Additionally, the vehicle 1000 also comprises a controller 200 and a motor 300. The controller 200 is configured to manage the supply of power from the battery 100 to the motor 300, e.g., for working power requirements for starting, navigating, and driving the vehicle 1000.

In some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

Referring to FIG.2, FIG. 2 is a structural schematic diagram of a battery provided in one embodiment of the present disclosure. The battery 100 comprises a battery cell 10 and a box 20, wherein the battery cell 10 is housed the box 20. The box 20 is configured to provide a containment space for the battery cell 10, and the box 20 can be of various structures. In some embodiments, the box 20 can comprise a first sub-box 21 and a second sub-box 22, wherein the first sub-box 21 and the second sub-box 22 are capped with each other. The first sub-box 21 and the second sub-box 22 collectively define a containment space for accommodating the battery cell 10. The second sub-box 22 can be a hollow structure open at one end, and the first sub-box 21 can be a plate-like structure. The first sub-box 21 is capped over an opening side of the second sub-box 22 so that the first sub-box 21 and the second sub-box 22 together define a containment space. Additionally, both the first sub-box 21 and the second sub-box 22 can be hollow structures open at one end, and an opening side of the first sub-box 21 is capped over an opening side of the second sub-box 22.

In the battery module 100, the multiple battery cells 10 can be connected in series, parallel, or hybrid. A hybrid connection refers to having both series and parallel connections among multiple battery cells 10. The multiple battery cells 10 can be directly connected in series, parallel, or hybrid, and then the whole comprising the multiple battery cells 10 is housed in the box 20. Of course, the battery 100 can also be in the form that, the multiple battery cells 10 can be first connected in series, parallel, or hybrid to form battery modules, and then the multiple battery modules can be connected in series, parallel, or hybrid to be formed into a whole, which is accommodated within the box 20. The battery 100 can also comprise other structures. For example, the battery 100 can also comprise a busbar component, configured for achieving an electrical connection between the multiple battery cells 10.

Each battery cell 10 can be a secondary battery or a primary battery. The battery cell 10 can also be a lithium-sulfur battery, sodium-ion battery, magnesium-ion battery, or other types, but is not limited to these.

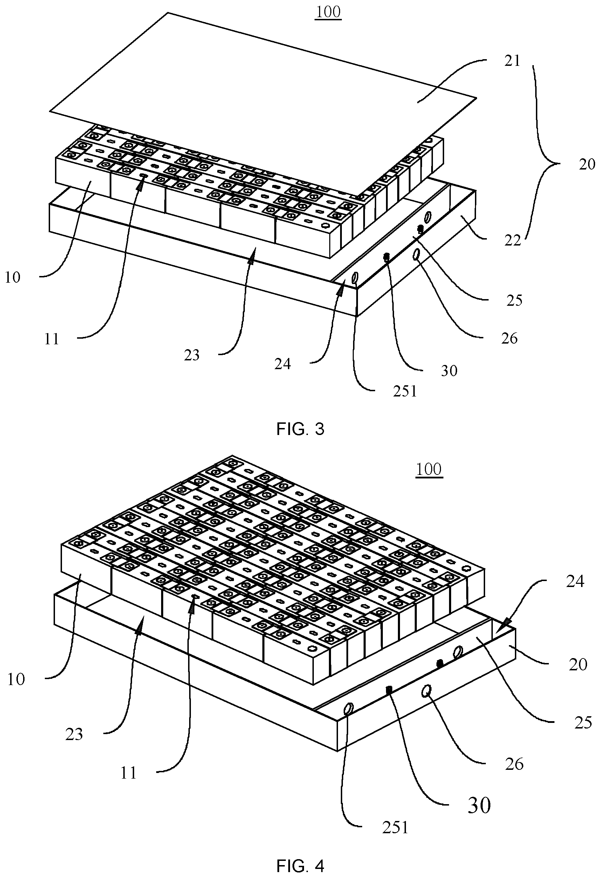

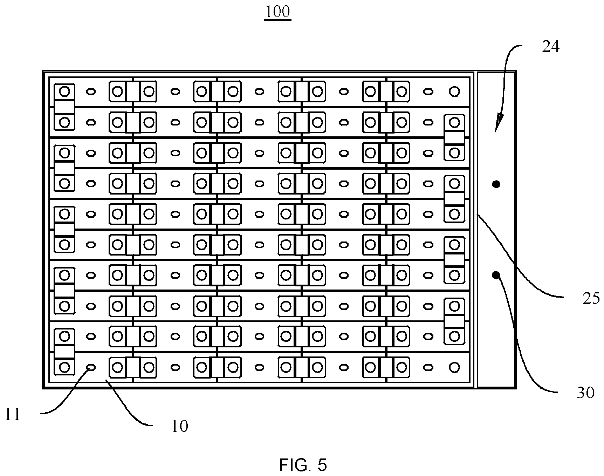

Referring to FIGS. 3 to 5, FIG. 3 is a schematic diagram of a disassembled structure of a battery provided in one embodiment of the present disclosure; FIG. 4 is a top view of an internal structure of the battery shown in FIG. 3; and FIG. 5 is a top view of an internal structure of the battery shown in FIG. 3. The present disclosure provides a battery 100. The battery 100 comprises multiple battery cells 10, a box 20, and a spray mechanism 30, wherein at least one battery cell 10 among multiple battery cells 10 comprises a pressure relief mechanism 11. The box 20 comprises an electrical chamber 23, a collection chamber 24, and a first isolation component 25, wherein the electrical chamber 23 is configured to accommodate the multiple battery cells 10; the collection chamber 24 is configured to collect emissions from the battery cells 10 arranged with the pressure relief mechanism 11 when the pressure relief mechanism 11 is actuated; the first isolation component 25 is configured to isolate the electrical chamber 23 and the collection chamber 24; and the first isolation component 25 is provided with a first through hole 251, wherein the emissions can enter the collection chamber 24 through the first through hole 251. A spray mechanism 30 is arranged within the collection chamber 24, wherein the spray mechanism 30 is configured to spray firefighting media into the collection chamber 24.

The battery cell 10 is the smallest unit comprising the battery 100. The battery cell 10 includes an end cap, a shell, a cell assembly, and other functional components, such as the pressure relief mechanism 11. The pressure relief mechanism 11 is arranged on the shell of the battery cell 10 and is configured to release the internal pressure of the battery cell 10. It can be set to actively actuate or passively actuate. For example, when the battery cell 10 experiences thermal runaway and the internal pressure of the battery cell 10 reaches a preset value, the pressure relief mechanism 11 is passively actuated, thus discharging the emissions generated inside the battery cell 10 out of the battery cell 10. This prevents hazards caused by excessively high internal pressure in the battery cell 10.

In multiple battery cells 10, only one battery cell 10 can be provided with the pressure relief mechanism 11, or multiple battery cells 10 can be provided with the pressure relief mechanism 11, or each battery cell 10 can be provided with the pressure relief mechanism 11.

The electrical chamber 23 is arranged inside the box 20 and occupies a portion of the space within the box 20, which is configured to accommodate multiple battery cells 10. The multiple battery cells 10 are tightly arranged in a regular manner inside the electrical chamber 23 to make full use of the space within the electrical chamber 23, thereby increasing the energy density of the battery 100. The size and shape of the electrical chamber 23 can be determined based on the number and size of battery cells 10 needed to be accommodated inside the box 20 of an individual battery 100. Since the electrical chamber 23 accommodates battery cells 10 at a higher potential, the electrical chamber 23 can also be referred to as the high-voltage chamber.

The collection chamber 24 is arranged inside the box 20 and occupies a portion of the space within the box 20. It is adjacent to the electrical chamber 23 and is configured to accommodate emissions discharged from the battery cells 10. Corresponding to the electrical chamber 23, since the collection chamber 24 is at a lower potential, the collection chamber 24 can also be referred to as the low-voltage chamber.

The first isolation component 25 is arranged inside the box 20 and is configured to separate the electrical chamber 23 from the collection chamber 24, thereby essentially isolating the electrical chamber 23 from the collection chamber 24. The first isolation component 25 is essentially plate-shaped and can be vertically or horizontally arranged to divide the internal space of the box 20 into two parts.

The first isolation component 25 can be a specific structural component arranged inside the box 20 and solely configured for spatial separation, or it can be partially a hot management component of the battery 100, thus allowing the first isolation component 25 to also serve other functions. A hot management component is a device within the battery 100 that is provided with a cooling medium to regulate the temperature of multiple battery cells 10. The hot management component can also be a cooling component, cooling system, or cooling plate. Additionally, the hot management component can be configured for heating, although this is not specifically limited in the present disclosure. When the hot management component is partially configured for the first isolation component 25, it regulates the temperature of the battery cell 10 and partitions the space within the box 20 at the same time.

The first isolation component 25 is provided thereon with a first through hole 251, wherein the first through hole 251 communicates the electrical chamber 23 with the collection chamber 24. This allows the emissions to pass from the electrical chamber 23 to the collection chamber 24 after leaving the battery cell 10 and then be in contact with firefighting media in the collection chamber 24. There is no obstruction between the first through hole 251 and the pressure relief mechanism 11 of the battery cell 10, thus allowing emissions to enter the collection chamber 24 smoothly. The shape or size of the first through hole 251 is not limited in the present disclosure to ensure that the pressure relief mechanism 11 can smoothly discharge emissions into the collection chamber 24.

The spray mechanism 30 is arranged inside the collection chamber 24 and is configured to spray firefighting media onto the emissions entering the collection chamber 24, thus reducing the temperature and/or the concentration of combustibles in the emissions. The spray mechanism 30 can be a nozzle, a spray tip, or components that spray firefighting media stored internally to the surrounding environment.

In this embodiment, the spray mechanism 30 is chosen as a miniature nozzle, and the selection of the size and structure can be determined based on the box 20. The spray mechanism 30 ejects the firefighting media to fill the internal space of the collection chamber 24 as much as possible by the firefighting media, thus ensuring sufficient contact between the firefighting media and the emissions. This enhances the effectiveness of the firefighting media in treating the emissions.

Multiple spray mechanisms 30 can be arranged to enable the firefighting media to cover a larger area of the space when the firefighting media is sprayed out, thereby improving the effectiveness of the firefighting media.

In the embodiment, the firefighting media include but are not limited to ultrapure water, fluorinated liquids, and other liquids. These types of liquids have high inertness, making them less prone to chemical reactions with other substances, which enhances the safety when spraying firefighting media. Additionally, when the firefighting media is heated, it quickly vaporizes and carries away heat from the surrounding materials, thereby reducing the temperature of the emissions. Furthermore, when the firefighting media liquefies, it dilutes the emissions, thus lowering the concentration of combustible materials in the surrounding so as to further enhance the safety of the battery 100.

Therefore, by partitioning the electrical chamber 23 accommodating the battery cell 10 from the collection chamber 24, the emissions are sprayed for firefighting after being discharged into the collection chamber 24. This prevents the firefighting media from entering the electrical chamber 23 and affecting the battery cells 10, thereby reducing the risk of electrical hazards and improving the safety of the battery 100.

According to some embodiments of the present disclosure, the battery 100 further comprises a first exhaust valve (not shown in the figure), wherein the first exhaust valve is mounted at the first through hole 251.

The first exhaust valve is arranged at the first through hole 251 and is configured to control the passage between the electrical chamber 23 and the collection chamber 24, which ensures that the passage between the electrical chamber 23 and the collection chamber 24 is open only when it is necessary to discharge emissions into the collection chamber 24. This ensures that the electrical chamber 23 and the collection chamber 24 remain isolated when thermal runaway has not occurred, thus ensuring that the working environment of the battery cell 10 is not affected.

When the first exhaust valve is open, the first through hole 251 is open; when the first exhaust valve is closed, the first through hole 251 is closed. The first exhaust valve can be actively opened and closed, or passively opened and closed. Actively opened and closed means that the user or the battery 100 directly controls the opening and closing of the first exhaust valve based on specific circumstances. Passively opened and closed means that the first exhaust valve opens passively when the pressure inside the electrical chamber 23 reaches a preset value. The present disclosure does not limit the transmission method or specific structure of the first exhaust valve, as long as it can achieve the objective of controlling the opening and closing of the passage between the electrical chamber 23 and the collection chamber 24.

By arranging the first exhaust valve in this way, the control of the emissions from the electrical chamber 23 into the collection chamber 24 is achieved.

According to some embodiments of the present disclosure, the pressure relief mechanism 11 is arranged opposite to the first through hole 251.

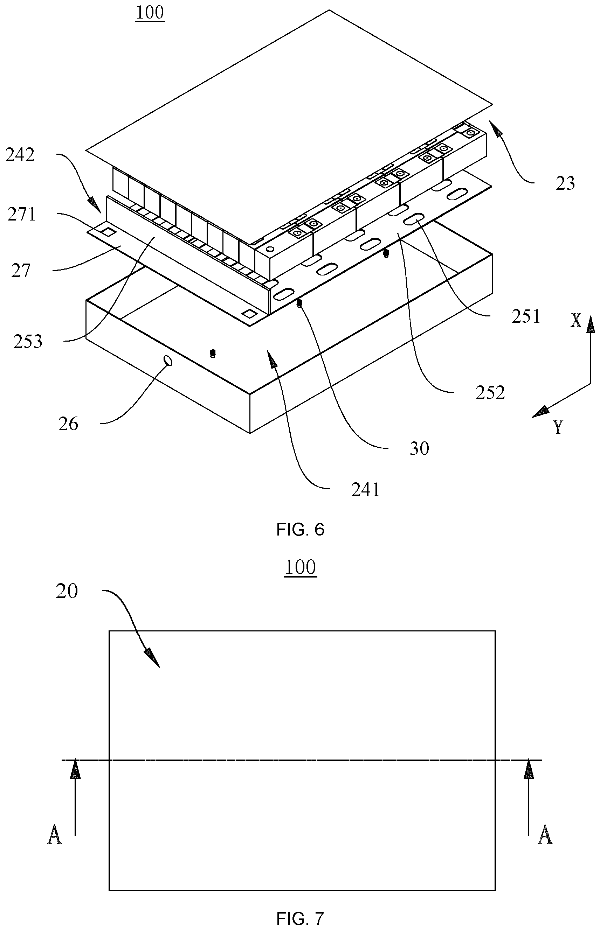

Referring to FIG. 6, FIG. 6 is a schematic diagram of a disassembled structure of a battery provided in another embodiment of the present disclosure. In the embodiment, the pressure relief mechanism 11 is arranged on a wall of the battery cell 10 (the wall is obscured in FIG. 6), wherein the wall is affixed to the first isolation component 25. The pressure relief mechanism 11 is arranged opposite the first through hole 251 on the first isolation component 25, thus allowing emissions from the battery cell 10 to quickly and directly enter the collection chamber 24 through the first through hole 251.

In this way, the pressure relief mechanism 11 is arranged opposite to the first through hole 251 so as to allow emissions from the battery cell 10 to be discharged more directly into the collection chamber 24, so as to enhance the escape efficiency of emissions.

According to some embodiments of the present disclosure, the box 20 is provided thereon with an exhaust port 26, wherein the emissions are discharged from the box 20 through the exhaust port 26.

In the embodiment, the exhaust port 26 is provided on the box 20. Moreover, the exhaust port 26 is arranged in the box 20 on a side adjacent to the collection chamber 24 and is in communication with the collection chamber 24. The exhaust port 26 is configured to expel the emissions that have entered the collection chamber 24 to the outside environment of the box 20, thus preventing the accumulation of emissions inside the box 20.

Therefore, by arranging the exhaust port 26, the emissions can be discharged from the box 20 of the battery 100 to the outside, thus reducing the risk of secondary hazards of the battery 100.

According to some embodiments of the present disclosure, the battery 100 further comprises a second exhaust valve (not shown in the figure), wherein the second exhaust valve is mounted at the exhaust port 26.

The second exhaust valve is arranged at the exhaust port 26 and is configured to control the passage between the box 20 and the external environment of the box 20. It enables that the box 20 to communicate with the external environment only when it is necessary to discharge emissions to the outside, which ensures that the box 20 remains isolated from the external environment when a thermal runaway has not occurred, thus preventing the battery 100 from being affected by the external environment.

When the second exhaust valve is open, the exhaust port 26 is open; when the second exhaust valve is closed, the exhaust port 26 is closed. The second exhaust valve can be actively opened and closed, or passively opened and closed. Actively opened and closed means that the user or the battery 100 directly controls the opening and closing of the second exhaust valve based on specific circumstances. Passively opened and closed means that the second exhaust valve opens passively when the pressure inside the electrical chamber 23 reaches a preset value. The present disclosure does not limit the transmission method or specific structure of the second exhaust valve, as long as it can achieve the objective of controlling the opening and closing between the box 20 and the external environment.

In this way, the control of emissions from inside the box 20 to the external environment is achieved by arranging the second exhaust valve.

According to some embodiments of the present disclosure, the box 20 further comprises a second isolation component 27, wherein the second isolation component 27 is configured to divide the collection chamber 24 into a first sub-chamber 241 and a second sub-chamber 242; the second isolation component 27 is provided with a second through hole 271 that communicates the first sub-chamber 241 and the second sub-chamber 242; the first through hole 251 is configured to communicate the electrical chamber 23 and the first sub-chamber 241; the emissions are discharged from the box 20 sequentially through the first through hole 251, the first sub-chamber 241, the second through hole 271, the second sub-chamber 242, and the exhaust port 26; and the spray mechanism 30 is arranged within the first sub-chamber 241 and/or the second sub-chamber 242.

The second isolation component 27 can be a basic plate shape and is arranged within the space inside the box 20; it is configured to divide the collection chamber 24 into two parts. In the embodiment, the collection chamber 24 is divided by the second isolation component 27 into the first sub-chamber 241 and the second sub-chamber 242. The first sub-chamber 241 is in communication with the second sub-chamber 242 and the electrical chamber 23, respectively. Therefore, the emissions, after being discharged from the electrical chamber 23, first enter the first sub-chamber 241 and are buffered and decelerated, then enter the second sub-chamber 242. This avoids the direct impact of the emissions on the various through holes, valves, and other structures, which leads to damage and results in defects such as poor sealing. The second isolation component 27 is provided thereon with a second through hole 271 to communicate the first sub-chamber 241 with the second sub-chamber 242. The present disclosure does not limit the size or shape of the second through hole 271, as long as the objective that the emissions can be smoothly dispersed from the first sub-chamber 241 to the second sub-chamber 242 can be achieved.

In this way, further partitioning of the collection chamber 24 is achieved by arranging the second isolation component 27, which serves to buffer the discharge process of emissions. This avoids damages caused by the direct impact of the emissions on through holes, valves, and other structures.

According to some embodiments of the present disclosure, the electrical chamber 23 and the first sub-chamber 241 are arranged along a first direction; the second sub-chamber 242 and the first sub-chamber 241 are arranged along the first direction; the electrical chamber 23 and the second sub-chamber 242 are arranged along a second direction; and the second direction is perpendicular to the first direction.

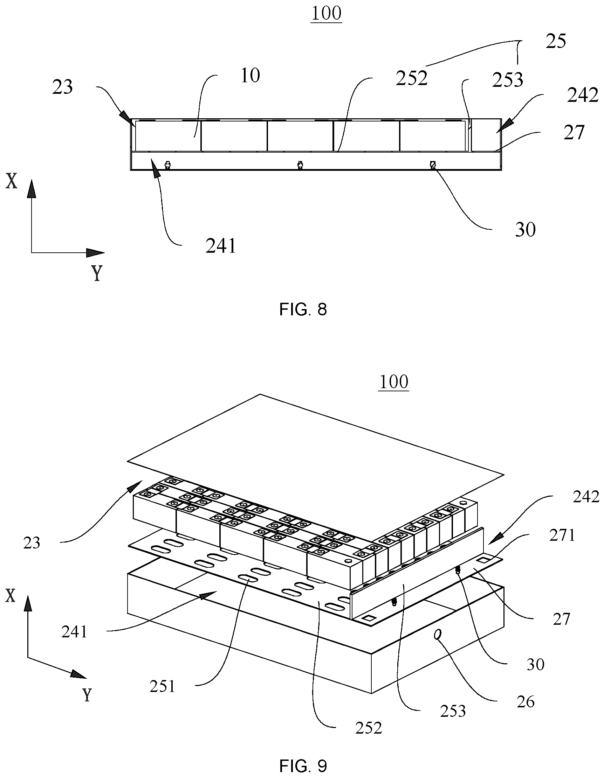

Referring to FIGS. 6 and 8, FIG. 6 is a schematic diagram of a disassembled structure of a battery provided in another embodiment of the present disclosure. FIG. 8 is a schematic diagram of the battery shown in FIG. 7 in a section along A-A. The first direction can be the direction X in the figure, and the second direction can be the direction Y in the figure, wherein the direction X and the direction Y are substantially perpendicular. The electrical chamber 23 and the first sub-chamber 241 are stacked along the first direction. The second sub-chamber 242 and the first sub-chamber 241 are stacked along the first direction. Meanwhile, the second sub-chamber 242 is adjacent to the electrical chamber 23 along the second direction. In the embodiment, the first sub-chamber 241 is arranged at the bottom of the box 20 and the first sub-chamber 241 is of a relatively flat shape. The electrical chamber 23 and the second sub-chamber 242 are arranged above the first sub-chamber 241 at the same time. After leaving the battery cell 10, the emissions descend into the first sub-chamber 241, disperse horizontally, and then ascend into the second sub-chamber 242 through the second through hole 271. Finally, they exit the box 20 through the exhaust port 26.

In the embodiment, the arrangement of the electrical chamber 23, the first sub-chamber 241, and the second sub-chamber 242 in sequence ensures that the discharge path of emissions essentially passes through the entire collection chamber 24, which makes full use of the internal space of the collection chamber 24, thus indirectly increasing the energy density of the battery 100.

According to some embodiments of the present disclosure, the first isolation component 25 comprises a first plate body 252 and a second plate body 253 perpendicular to each other; the electrical chamber 23 and the first sub-chamber 241 are located on opposite sides of the first plate body 252; the first through hole 251 is provided on the first plate body 252; the electrical chamber 23 and the second sub-chamber 242 are located on opposite sides of the second plate body 253; and the second isolation component 27 is a plate-like structure and is coplanar with the first plate body 252.

Referring to FIGS. 6 and 8, FIG. 6 is a schematic diagram of a disassembled structure of a battery provided in another embodiment of the present disclosure. FIG. 8 is a schematic diagram of the battery shown in FIG. 7 in a section along A-A. The first plate body 252 and the second plate body 253 can be essentially plate-like structure components, and arranged perpendicular to each other at the end parts, forming the first isolation component 25 of a substantially approximate L-shaped structure. The first plate body 252 is horizontally arranged. The second isolation component 27 and the first plate body 252 are connected with each other and arranged in the second direction. The first plate body 252 is coplanar with the second isolation component 27, which means that the first plate body 252 is located in substantially the same planar position as the second isolation component 27.

In this way, the arrangement of the electrical chamber 23, the first sub-chamber 241, and the second sub-chamber 242 makes full use of the internal space of the box 20 and simplifies the structure of the first isolation component 25 and the second isolation component 27.

According to some embodiments of the present disclosure, the first plate body 252 and the second isolation component 27 are integrally molded.

The first plate body 252 is in the same plane as the second isolation component 27. Optionally, the first plate body 252 is integrally molded with the second isolation component 27 to optimize the structure and reduce the manufacturing cost. As previously described, both the first plate body 252 and the second isolation component 27 can be part of the structure of the hot management component.

In this way, integrally molding the first plate body 252 with the second isolation component 27 simplifies the manufacturing process and reduces manufacturing costs.

According to some embodiments of the present disclosure, a sensor is further provided within the collection chamber 24 (not shown in the figure); the sensor is configured to detect a gas state parameter within the collection chamber 24; the spray mechanism 30 is connected to the sensor; and the spray mechanism 30 is configured to spray firefighting media into the collection chamber 24 when the sensor detects an abnormal gas state parameter.

The sensors include one or more temperature detectors, smoke detectors, gas detectors, and/or other types of detectors. The sensor monitors the gas state parameters inside the collection chamber 24. When abnormal gas state parameters are detected, indicating that the battery 100 is in a thermal runaway state, the sensor emits a corresponding alarm signal. The gas state parameters include but are not limited to temperature, and smoke and hazardous gas concentrations. The hazardous gases include but are not limited to carbon monoxide, hydrogen, etc. Specific gas state parameters correspond to the parameters monitored by the sensor.

The sensor is electrically connected to the spray mechanism 30. When the sensor detects abnormal gas state parameters inside the collection chamber 24, the sensor emits a signal to control the spray mechanism 30 to spray the firefighting media into the collection chamber 24.

In this way, by arranging the sensor within the collection chamber 24 to detect the gas state parameter inside the collection chamber 24, it provides the basis for the operation of the spray mechanism 30.

According to some embodiments of the present disclosure, the battery 100 further comprises a control device (not shown in the figure) and a valve (not shown in the figure); the control device is connected to the sensor and the valve; the control device controls the valve based on a signal from the sensor; and the valve controls an opening or a closing of the spray mechanism 30.

The control device receives electrical signals from the sensor and issues instructions to control the operation of the valve based on the signal. The valve is configured to control the opening or closing of the spray mechanism 30. The control device can include integrated circuits, circuit boards, and other electronic components, which can be either separately arranged or integrated with other electronic devices.

The valve belongs to the prior art, and the present disclosure does not restrict the structure, form, or power of the valve so as to achieve the objective of controlling the opening and closing of the spray mechanism 30. In the embodiment, an electromagnetic valve is applied by the valve for the rapid and convenient control of the spray mechanism 30.

Therefore, by arranging the control device and valve, the spray mechanism 30 can be quickly and accurately controlled based on the detection results of the sensor.

Further, the battery 100 can also include a container (not shown in the figure). The container is connected to the spray mechanism 30. The container is configured to hold the firefighting media. The firefighting media circulates between the container and the spray mechanism 30. The container can be provided separately or can be a device that holds coolant in the cooling system in the battery 100, for example, a hot management component. This achieves a functional composite of the structures and reduces the space occupied within the battery 100.

It should be understood that at least a power member should be included between the spray mechanism 30 and the container. The power member includes but is not limited to, pumps, motors, and other devices that are capable of doing work on an external substance. The power member does work on the firefighting media such that when the valve is actuated, the firefighting media is able to be ejected from the spray mechanism 30 with a certain initial velocity to cover a wider internal space of the collection chamber 24.

According to some embodiments of the present disclosure, the present disclosure provides an electric device, wherein the electric device comprises the battery 100 as described in the above embodiments and the battery 100 is configured to provide electrical energy.

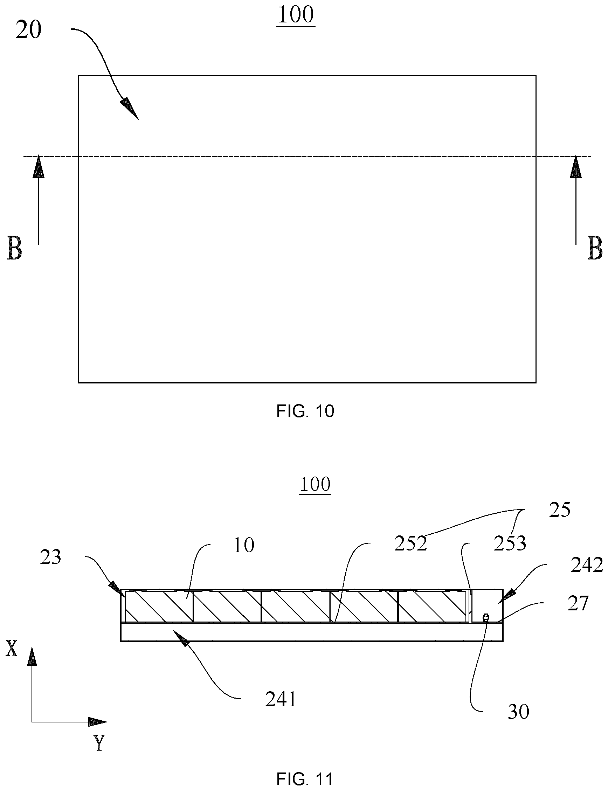

Referring to FIGS. 9 to 11, FIG. 9 is a schematic diagram of a disassembled structure of another battery provided in one embodiment of the present disclosure; FIG. 10 is a top view of the battery shown in FIG. 9; and FIG. 11 is a schematic diagram of the battery shown in FIG. 10 in a section along B-B. The present disclosure provides a battery 100 comprising a box 20 provided therein with a first isolation component 25. The first isolation component 25 divides the internal space of the box 20 into an electrical chamber 23 and a collection chamber 24. The electrical chamber 23 accommodates multiple battery cells 10. The battery cell 10 is provided with a pressure relief device. The first isolation component 25 is provided thereon with a first through hole 251, and the pressure relief device is provided corresponding to the first through hole 251. The first isolation component 25 includes a horizontally arranged first plate body 252 and a vertically arranged second plate body 253. An end part of the first plate body 252 is vertically connected to an end part of the second plate body 253. The first isolation component 25 is L-shaped. The box 20 is also provided therein with a second isolation component 27. The second isolation component 27 is coplanar with the first plate body 252. The second isolation component 27 separates the collection chamber 24 into a first sub-chamber 241 and a second sub-chamber 242. The first sub-chamber 241 has a flat shape and is arranged at the bottom of the electrical chamber 23. The second sub-chamber 242 is arranged on the side surface of the electrical chamber 23 and on the top of the first sub-chamber 241. The second isolation component 27 is provided thereon with a second through hole 271 to communicate the first sub-chamber 241 with the second sub-chamber 242. The spray mechanism 30 is provided in the second sub-chamber 242 and is configured to spray a firefighting media to the emissions inside the second sub-chamber 242. The box 20 is provided thereon with an exhaust port 26, wherein the emissions leave the box 20 through the exhaust port 26.

While preferred embodiments have been described and illustrated in the present disclosure, it is possible to make various improvements and replace components with equivalents within the scope of the present disclosure. In particular, as long as there are no structural conflicts, the various technical features mentioned in each embodiment can be combined in any way. The present disclosure is not limited to the specific embodiments disclosed herein but includes all technical solutions falling within the scope of the claims.

## Claims

1. A battery, comprising
multiple battery cells, wherein at least one battery cell among multiple battery cells comprises a pressure relief mechanism;
a box, comprising an electrical chamber, a collection chamber, and a first isolation component, wherein the electrical chamber is configured to accommodate the multiple battery cells; the collection chamber is configured to collect emissions from the battery cells arranged with the pressure relief mechanism when the pressure relief mechanism is actuated; the first isolation component is configured to isolate the electrical chamber and the collection chamber; and the first isolation component is provided with a first through hole, wherein the emissions can enter the collection chamber through the first through hole; and
a spray mechanism, arranged within the collection chamber, wherein the spray mechanism is configured to spray firefighting media into the collection chamber.

2. The battery according to claim 1, wherein the battery further comprises a first exhaust valve, wherein the first exhaust valve is mounted at the first through hole.

3. The battery according to claim 1, wherein the pressure relief mechanism is arranged opposite to the first through hole.

4. The battery according to claim 1 or 3, wherein the box is provided thereon with an exhaust port, wherein the emissions are discharged from the box through the exhaust port.

5. The battery according to claim 4, wherein the battery further comprises a second exhaust valve, wherein the second exhaust valve is mounted at the exhaust port.

6. The battery according to claim 4, wherein the box further comprises a second isolation component, wherein the second isolation component is configured to divide the collection chamber into a first sub-chamber and a second sub-chamber; the second isolation component is provided with a second through hole that communicates the first sub-chamber and the second sub-chamber; the first through hole is configured to communicate the electrical chamber and the first sub-chamber; the emissions are discharged from the box sequentially through the first through hole, the first sub-chamber, the second through hole, the second sub-chamber, and the exhaust port; and
the spray mechanism is arranged within the first sub-chamber and/or the second sub-chamber.

7. The battery according to claim 6, wherein the electrical chamber and the first sub-chamber are arranged along a first direction; the second sub-chamber and the first sub-chamber are arranged along the first direction; the electrical chamber and the second sub-chamber are arranged along a second direction; and the second direction is perpendicular to the first direction.

8. The battery according to claim 6, wherein the first isolation component comprises a first plate body and a second plate body perpendicular to each other; the electrical chamber and the first sub-chamber are located on opposite sides of the first plate body; the first through hole is provided on the first plate body; the electrical chamber and the second sub-chamber are located on opposite sides of the second plate body; and the second isolation component is a plate-like structure and is coplanar with the first plate body.

9. The battery according to claim 8, wherein the first plate body and the second isolation component are integrally molded.

10. The battery according to any one of claims 1 to 9, wherein a sensor is further provided within the collection chamber; the sensor is configured to detect a gas state parameter within the collection chamber; the spray mechanism is connected to the sensor; and the spray mechanism is configured to spray the firefighting media into the collection chamber when the sensor detects an abnormal gas state parameter.

11. The battery according to claim 10, wherein the battery further comprises a control device and a valve; the control device is connected to the sensor and the valve; the control device controls the valve based on a signal from the sensor; and the valve controls an opening or a closing of the spray mechanism.

12. An electric device, comprising the battery according to any one of claims 1 to 11, wherein the battery is configured to provide electrical energy.
